# EUROPEAN PATENT SPECIFICATION

(11) **EP 1 300 722 B1**
(45) Date of publication and mention of the grant of the patent: **06.10.2004**
(21) Application number: 02251034.1
(22) Date of filing: 15.02.2002
(51) Int. Cl.: G02F 1/1343

(54) **Electrode structure for an in-plane switching mode liquid crystal display device**
Elektrodenanordnung für eine in der Ebene schaltende Flüssigkristall-Anzeigevorrichtung
Structure d'électrodes pour un dispositif d'affichage à cristaux liquides à commutation dans le plan

(30) Priority: 16.07.2001 EP 01306108
(43) Date of publication of application: 09.04.2003
(73) Proprietor: Hannstar Display Corp., Taipei, Taiwan (TW)
(72) Inventor: Yang, Kie-Hsiung, Yang-Mei Chen, Taoyuan Hsien (TW)
(74) Representative: O'Connell, David Christopher

(56) References cited:
- US-A- 5 745 207
- US-A- 5 905 556
- US-A- 6 137 557
- US-A- 6 141 078
- PATENT ABSTRACTS OF JAPAN vol. 1995, no. 10, 30 November 1995 (1995-11-30) & JP 07 191336 A (TOSHIBA CORP), 28 July 1995 (1995-07-28)

## Description

### BACKGROUND OF THE INVENTION

### Field of the Invention

The present invention relates to an In-Plane Switching mode LCD (IPS-LCD) and, more particularly, to an electrode array structure of an IPS-LCD and a method of forming the same.

### Description of the Related Art

Liquid crystal displays (LCDs) may be classified by the orientation of the liquid crystal molecules between the spaced apart substrates. In a conventional twisted nematic LCD (TN-LCD), the liquid crystal molecules are twisted between the two substrates. In contrast, in an in-plane switching mode LCD (IPS-LCD), common electrodes and pixel electrodes are formed on a lower glass substrate (TFT substrate) and an in-plane electric field therebetween is generated to rearrange the liquid crystal molecules along the in-plane electric field. Accordingly, the IPS-LCD has been used or suggested for improving viewing angle, contrast ratio and color shift.

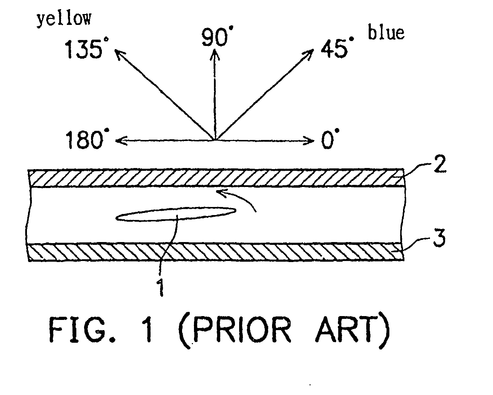

In the IPS-LCD, the display characteristics of the view angle with respect to the invert luminance are superior. However, as shown in Fig.1, when the liquid crystal molecules 1 are rotated to an angle 45° with respect to the in-plane electric field, the observed image from the direction crossing at 45 degrees or 135 degrees against the lengthwise direction of the common electrodes 2 and the pixel electrodes 3 is colored blue or yellow. This is a problem to be solved in the image quality of the IPS-LCD.

Seeking to solve the coloring phenomenon, a herringbone-shaped electrode structure is developed for modifying the rotating angle of the liquid crystal molecules. As shown in Fig.2, in the known prior art IPS-LCD, disclosed in Figure 4 of US 5,745,207, a TFT substrate 10 has a plurality of parallel data lines 12 extending along Y-axis and a plurality of parallel gate lines 14 extending along X-axis, which are arranged in a manner to form a matrix of pixel areas 24. Also, a comb-shaped pixel electrode 18 and a herringbone-shaped common electrode 20 are disposed in each pixel area 24, and at least one TFT device 16 is disposed at a cross point of the data line 12 and the gate line 14. In addition, an orientation layer (not shown) is spread on the entire surface of the TFT substrate 10, and the orientation layer is rubbed in a direction shown by arrow A so as to make liquid crystal molecules 22 arrange along the direction A before an external voltage is applied to the TFT substrate 10.

The comb-shaped pixel electrode 18 has a bar 18a transversely disposed over the gate line 14 to form a capacitor, and a plurality of continuous saw-toothed teeth 18b, 18c extending along Y-axis from the bar 18a. The herringbone-shaped common electrode 20 has a center wiring portion 20a extending along X-axis, and a plurality of saw-toothed bones 20b, 20c bent at the center wiring portion 20a and respectively extending along a first Y-axis and a second Y-axis. For example, the bones 20b extending along the first Y-axis are parallel to the teeth 18b, 18c and the bones 20b arrange at intervals between the teeth 18b, 18c.

When external voltage is applied to the TFT substrate 10, an in-plane electric field is formed between the bones 20a, 20b and the teeth 18b, 18c, resulting in a rotation of the liquid crystal molecules 22 toward the in-plane electric field. Using the center wiring portion 20a of the common electrode 20 as the discrimination, the pixel area 24 is divided into a first sub-pixel area 241 and a second sub-pixel area 242, and the liquid crystal molecules 22a and 22b positioned adjacent to the center wiring portion 20a respectively rotate in counterclockwise direction and in clockwise direction. In the first sub-pixel area 241, since the bones 20b, 20c and the teeth 18b, 18c have the same saw-toothed sidewalls, the liquid crystal molecules 22a and 22a' positioned adjacent to the tip of the saw-toothed sidewall respectively rotate in counterclockwise direction and in clockwise direction. Therefore, two domains are formed within the first sub-pixel area 241. Similarly, the liquid crystal molecules 22b and 22b' also form two domains within the second sub-pixel area 242. Furthermore, the saw-toothed sidewalls lead to a specific tilted degree of the in-plane electric field which corresponds to the rotation angle of the major axes of the liquid crystal molecules 22. It is preferable that the rotation angle θ of the liquid crystal molecules 22 satisfy the formula 0°< θ ≤ +60° or -60° ≤ θ < 0° to solve the coloring phenomenon.

However, the liquid crystal molecules 22 positioned at the peaks of the saw-toothed sidewall, that is, the parting of the two domains of the sub-pixel area, are jostled by surrounding molecules 22 that rotate in a different direction, thus the liquid crystal molecules 22 on the parting of the two domains are stopped from rotating. Due to both the stopped rotation and the common electrode 20 and the pixel electrode 20 non-transparent nature, the liquid crystal molecules 22 positioned at the peaks of the saw-toothed sidewall present as dark lines after voltage is applied to the TFT substrate 10, as shown by dotted lies I-I and II-II. This decreases the aperture ratio of the IPS-LCD. Especially when the number of peaks of the saw-toothed sidewall is increased, the number of dark lines is correspondingly increased and thereby the aperture ratio is further decreased. Thus, a novel electrode array structure of the IPS-LCD eliminating the aforementioned problems is called for.
Prior art documents JP 07 191 336, US 5,905,556 and US 5,745,207 disclose an electrode array structure in a pixel area of an in-plane switching mode LCD (IPS-LCD), comprising: a comb-shaped common electrode having a bar extending transversely and a plurality of teeth extending in a first lengthwise direction from the bar, and a comb shaped pixel electrode having a bar extending transversely parallel to the bar of the common electrode and a plurality of teeth extending in a second lengthwise direction from the bar, parallel to the first lengthwise direction, and is disposed between adjacent teeth of the common electrode.

### SUMMARY OF THE INVENTION

According to the present invention there is provided an electrode array structure for a pixel area of an in-plane switching mode liquid crystal display, comprising: a comb-shaped common electrode having a bar extending transversely and a plurality of teeth extending in a first lengthwise direction from the bar, and a comb shaped pixel electrode having a bar extending transversely parallel to the bar of the common electrode and a plurality of teeth extending in a second lengthwise direction from the bar, parallel to the first lengthwise direction, and is disposed between adjacent teeth of the common electrode; characterised in that each tooth of the common electrode is formed by lengthwise linking of a first plurality of trapezoids thereby defining a continuous saw tooth shaped sidewall; and that each tooth of the pixel electrode is formed by lengthwise linking of a second plurality of trapezoids thereby defining a continuous saw tooth shaped sidewall, and the second plurality of trapezoids being inverted with respect to the first plurality of trapezoids and that the number of trapezoids in each tooth of the common electrode is not equal to the number of inverted trapezoids in each tooth of the pixel electrode.

### BRIEF DESCRIPTION OF THE DRAWINGS

Fig. 1 is a top view showing the coloring image corresponding to the view angle.

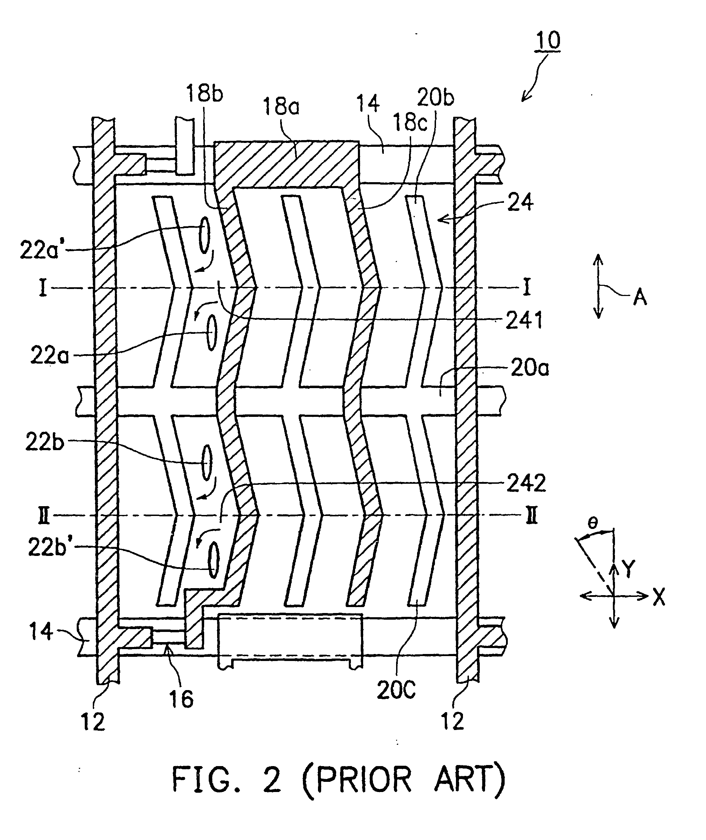

Fig.2 is a top view showing the electrode array structure of a conventional IPS-LCD.
Figs. 3A and 3B are top views showing the electrode array structure of an IPS-LCD.
. Fig.4A is a top view of a TFT substrate showing the first modified design of the electrode array structure shown in Fig.3A.
Fig.4B is a top view of a TFT substrate showing the second modified design of the electrode array structure shown in Fig.3A.
Fig.4C is a top view of a TFT substrate showing the third modified design of the electrode array structure shown in Fig.3A.
Fig.4D is a top view of a TFT substrate showing the fourth modified design of the electrode array structure shown in Fig.3A.
Figs. 5A and 5B are top views showing the electrode array structure of another IPS-LCD.
Figs. 6A and 6B are top views showing the electrode array structure of another IPS-LCD.
Figs. 7A and 7B are top views showing the electrode array structure of another IPS-LCD.
Fig. 8 is a top view showing the electrode array structure of IPS-LCD of the present invention.

Similar reference characters denote corresponding features consistently throughout the attached drawings.

### DETAILED DESCRIPTION OF THE PREFERRED EMBODIMENT

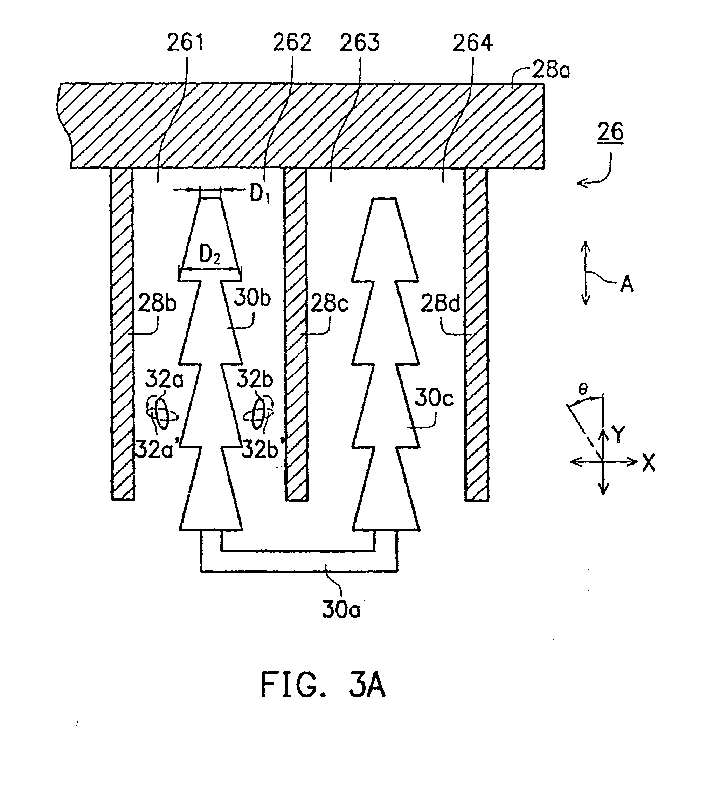

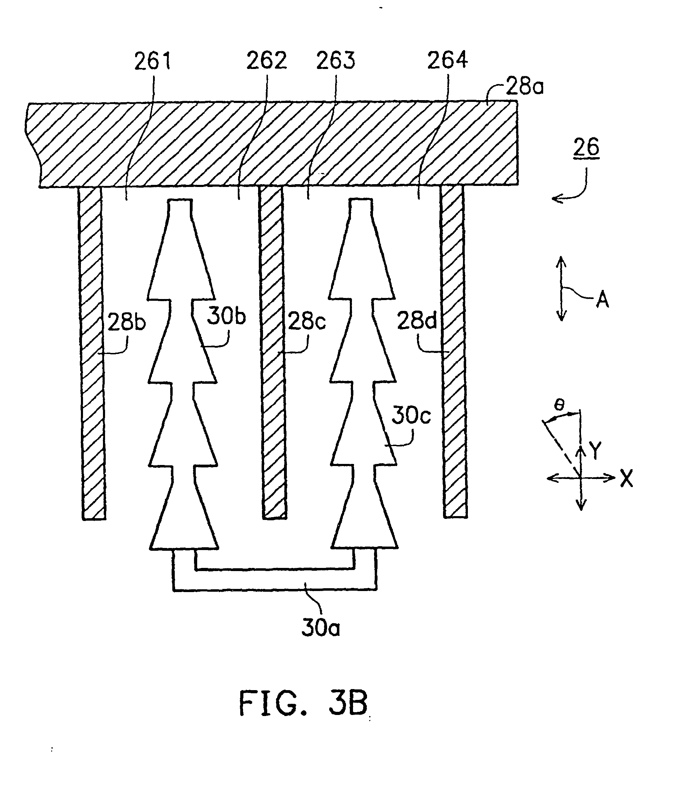

Figs. 3A and 3B are top views showing the electrode array structure of a first example of an IPS-LCD. In a pixel area 26, a comb-shaped common electrode 28 has a bar 28a and three teeth 28b, 28c, 28d, and a comb-shaped pixel electrode 30 has a bar 30a and two teeth 30b, 30c. Since the two teeth 30b, 30c are arranged at intervals among the three teeth 28b, 28c, 28d, the pixel area 26 is divided into four sub-pixel areas 261, 262, 263, 264. As shown in Fig.3A, note that each tooth 30b, 30c of the pixel electrode 30 is formed by lengthwise linking of a plurality of trapezoids to present a continuous ∠-shaped sidewall, presenting a Christmas tree-like profile. The top-base length D1 and the bottom-base length D2 of the trapezoid satisfy the formula D2 ≤ |D1±50µm|, excluding the case that D2=D1 .

Before a voltage is applied to the IPS-LCD, liquid crystal molecules 32 align along a rubbed direction shown by arrow A, thus the major axes of the liquid crystal molecules 22 is parallel to the teeth 28b, 28c, 28d of the common electrode 28. After applying the voltage to the IPS-LCD, an in-plane electric field is formed between the teeth 28b, 28c, 28d of the common electrode 28 and the teeth 30b, 30c of the pixel electrode 30, and then the liquid crystal molecules 32 rotate toward the in-plane electric field. For example, the liquid crystal molecule 32a positioned within the first sub-pixel area 261 rotates counterclockwise to become the dotted molecule 32a'. The liquid crystal molecule 32b positioned within the second sub-pixel area 262 rotates clockwise to become the dotted molecule 32b'. Thus, the tooth 30b of the pixel electrode 30 serves as a parting of two domains. Similarly, within the third sub-pixel area 263 and the fourth sub-pixel area 264, the tooth 30c of the pixel electrode 30 serves as a parting of two domains. Because the continuous ∠-shaped sidewalls lead to a specific tilted degree of the in-plane electric field which corresponds to the rotation angle of the major axes of the liquid crystal molecules 32, the rotation angle θ of the liquid crystal molecules 32 satisfies the preferred formula 0°< θ ≤ 60° or -60° ≤ θ < 0° to solve the coloring phenomenon.

In addition, the liquid crystal molecules 32 positioned over the tooth 30b, 30c of the pixel electrode 30, that is the parting of the two domains, are jostled by surrounding molecules 32 that rotate in a different direction, thus the liquid crystal molecules 32 over the tooth 30b, 30c are stopped from rotating, presenting as a dark line. However, since the pixel electrode 30 is not of transparent materials, the dark lines presenting on the teeth 30b, 30c of the pixel electrode 30 do not further decrease the aperture ratio of the IPS-LCD. Moreover, if the pixel electrode 30 is made of transparent materials, the aperture ratio of the IPS-LCD can be increased.

According to the above-described electrode array structure, the profile of the teeth 30b, 30c of the pixel electrode 30 can be further modified as shown in Fig. 3B. Note that a rectangular strip is disposed between two adjacent trapezoids.

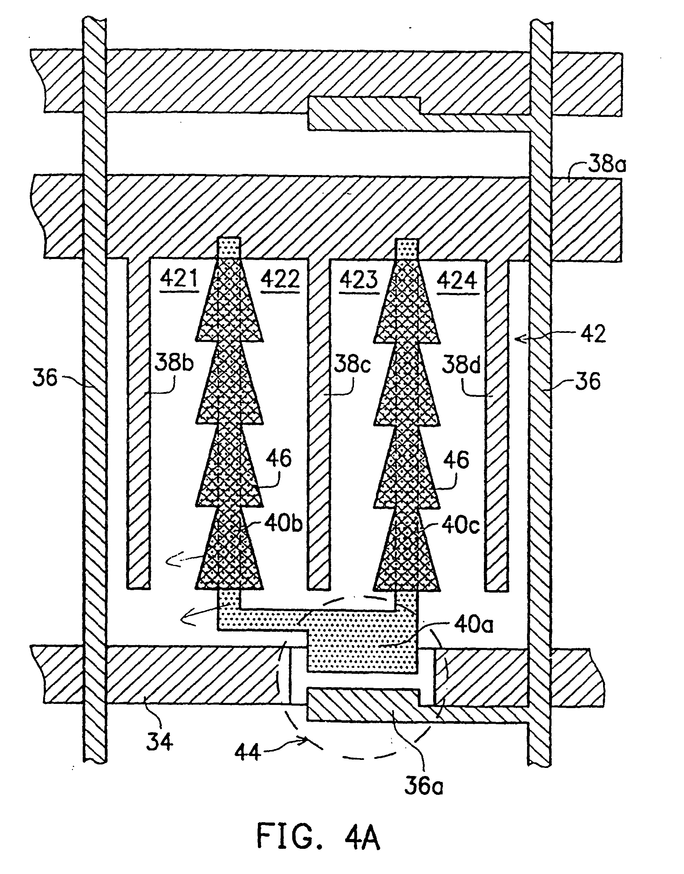

Hereinafter, the electrode array structure shown in Fig. 3A and modified designs of thereof are applied to a TFT substrate of IPS-LCD, as shown in Figs. 4A to 4D.

Fig.4A is a top view of a TFT substrate showing the first modified design of the electrode array structure shown in Fig.3A. In the first example, a TFT substrate has a plurality of parallel data lines 36 extending lengthwise and a plurality of parallel gate lines 34 extending transversely, which are arranged in a manner to form a matrix of pixel areas 42. Also, a comb-shaped common electrode 38 and a comb-shaped first pixel electrode 40 are disposed in each pixel area 42. The comb-shaped common electrode 38 has a bar 38a and three rectangular-shaped teeth 38b, 38c, 38d, and the comb-shaped first pixel electrode 40 has a bar 40a and two rectangular-shaped teeth 40b, 40c. Since the two teeth 40b, 40c appear at intervals among the three teeth 38b, 38c, 38d, the pixel area 42 is divided into four sub-pixel areas 421, 422, 423, 424. Moreover, a TFT device 44 is disposed on a predetermined area of the gate line 34, wherein a drain electrode is electrically connected to the bar 40a of the first pixel electrode 40, a source electrode is electrically connected to an extending area 36a of the data line 36, and a channel is disposed between the drain electrode and the source electrode.

In addition, a second pixel electrode 46 is formed over each rectangular-shaped tooth 40b, 40c of the first pixel electrode 40, in which a protection layer (not shown) is sandwiched between the first pixel electrode 40 and the second pixel electrode 46. The second pixel electrode 46, of indium tin oxide (ITO) or any other transparent conductive material, is formed by lengthwise linking of a plurality of specific trapezoids, presenting as a continuous ∠-shaped sidewall. The top-base length D1 and the bottom-base length D2 of the specific trapezoid satisfy the formula D2 ≤ |D1±50µm|, excluding the case that D2=D1 . Because the continuous ∠-shaped sidewalls lead to a specific tilted degree of the in-plane electric field which corresponds to the rotation angle of the major axes of the liquid crystal molecules, the rotation angle of the liquid crystal molecules is perfectly controlled to solve the coloring phenomenon. Also, since the first pixel electrode 40 is not of transparent materials, the dark lines presenting on the teeth 40b, 40c of the first pixel electrode 40 do not further decrease the aperture ratio of the IPS-LCD. Moreover, the second pixel electrode 46 is of transparent materials, so the aperture ratio of the IPS-LCD can be increased.

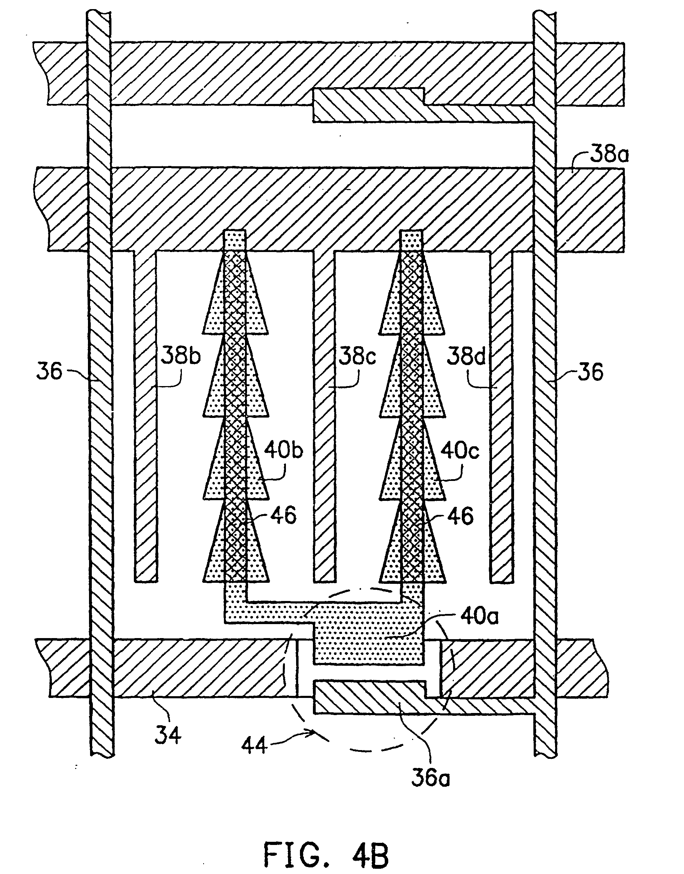

Fig.4B is a top view of a TFT substrate showing the second modified design of the electrode array structure shown in Fig.3A. Compared with the electrode array structure shown in Fig.4A, in the second modified design shown in Fig.4B, the pattern of the tooth 40b, 40c of the first pixel electrode 40 and the pattern of the second electrode 46 are exchanged. Thus, the tooth 40b, 40c of the first pixel electrode 40 is formed by lengthwise linking of the specific trapezoids to create a continuous ∠-shaped sidewall, and the second electrode 46 is formed to be a rectangular strip. This also achieves the aims of eliminating the coloring phenomenon and increasing the aperture ratio.

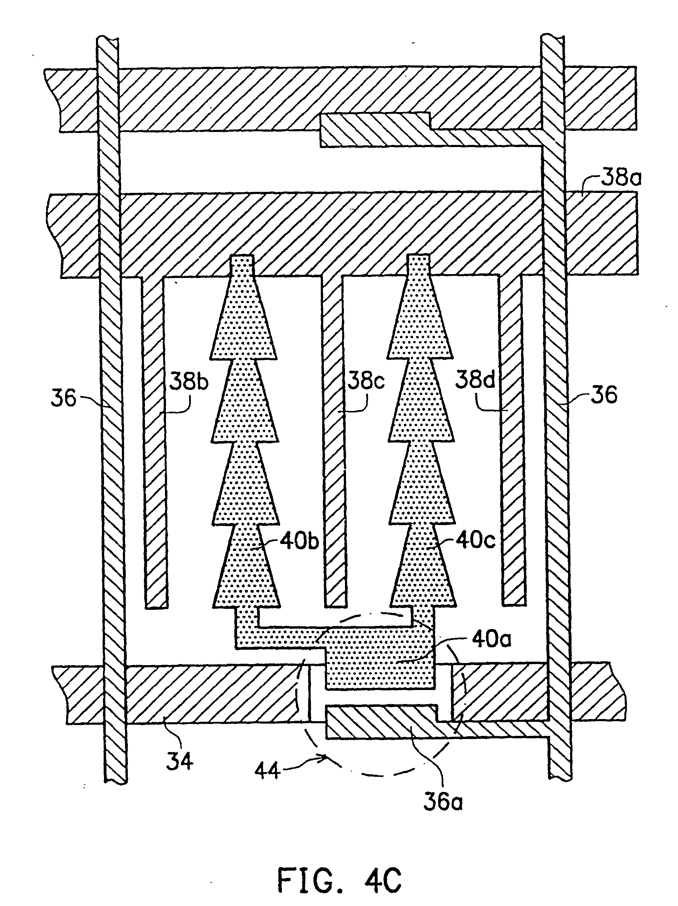

Fig.4C is a top view of a TFT substrate showing the third modified design of the electrode array structure shown in Fig.3A. Compared with the electrode array structure shown in Fig.4B, in the third modified design shown in Fig.4C, the fabrication of the second electrode 46 is omitted. Thus, only the tooth 40b, 40c of the first pixel electrode 40 is formed to present the continuous ∠-shaped sidewall. This not only achieves the aim of eliminating the coloring phenomenon, but also decreases manufacturing complexity and production costs.

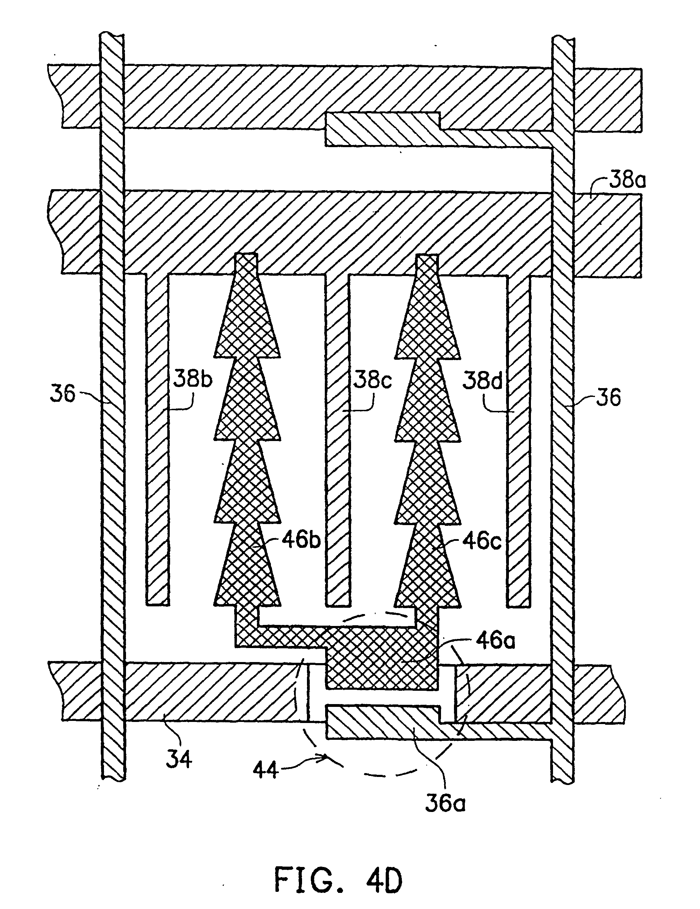

Fig.4D is a top view of a TFT substrate showing the fourth modified design of the electrode array structure shown in Fig.3A. Although the electrode array structure shown in Fig.4C can further decrease manufacturing complexity and production costs, the first pixel electrode 40 of opaque materials occupies more areas when the tooth 40b, 40c forms the Christmas tree-like-like profile, thus the problem of decreasing the aperture ratio is encountered. Seeking to solve this problem, in the fourth modified design shown in Fig.4D, the fabrication of the first pixel electrode 40 is omitted, and the pattern of the second pixel 46 is formed the same as the pattern of the first pixel electrode 40 shown in Fig.4C. Therefore, the second electrode 46 has a bar 46a, two teeth 46b, 46c with continuous ∠-shaped sidewalls. This not only achieves the aims of eliminating the coloring phenomenon and decreasing manufacturing complexity and production costs, but also further increases the aperture ratio of the IPS-LCD.

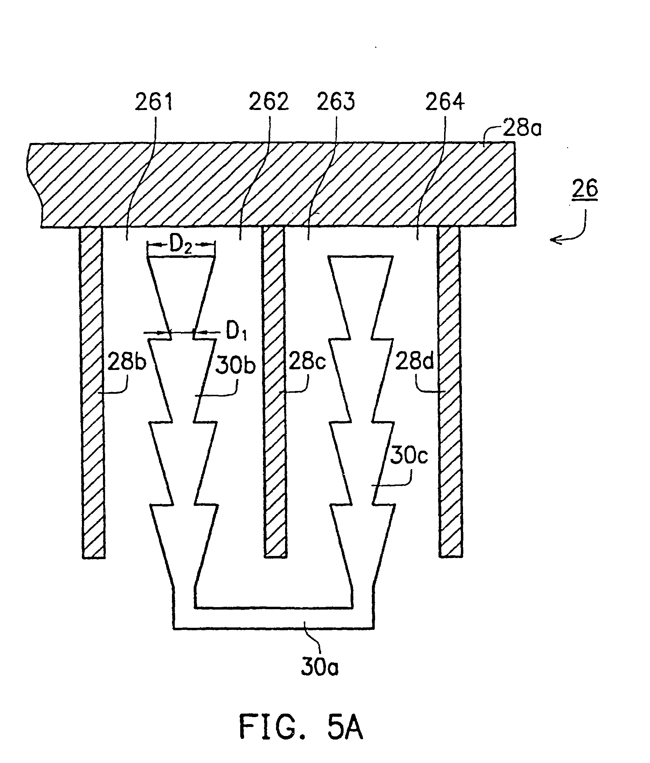

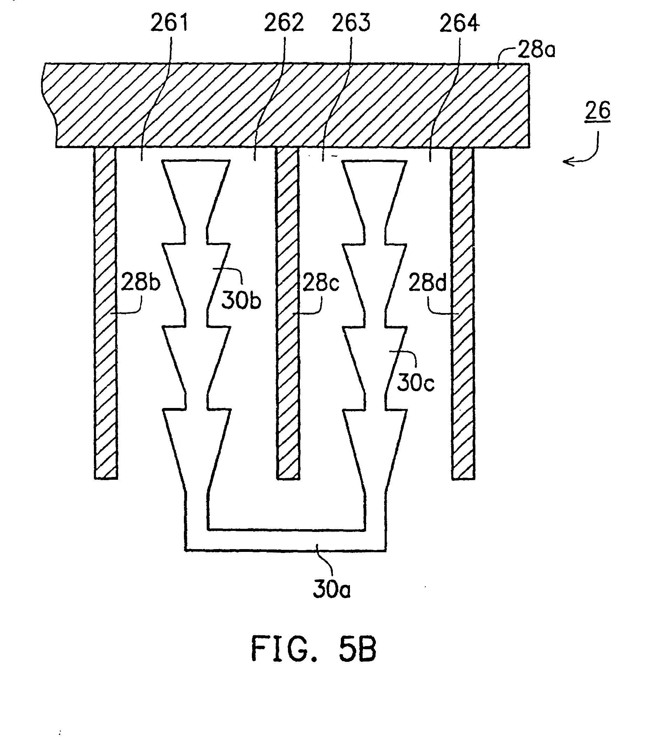

Figs. 5A and 5B are top views showing the electrode array structure of a second example of an IPS-LCD. In the pixel area 26, the electrode array structure shown in Fig.5A is almost the same as the electrode array structure shown in Fig.3A except with respect to the tooth 30b, 30c of the pixel electrode 30. In the second example, as shown in Fig.5A, note that each tooth 30b, 30c of the pixel electrode 30 is formed by lengthwise linking of a plurality of inverted trapezoids, presenting an inverted Christmas tree-like-like profile. The length D1 and the length D2 of the inverted trapezoid satisfy the formula D2 ≤ |D1±50µm|, excluding the case that D2=D1. This achieves the aims of eliminating the coloring phenomenon and increasing the aperture ratio. Also, as shown in Fig.5B, the profile of the tooth 30b, 30c of the pixel electrode 30 can be modified, in which a rectangular strip is disposed between two adjacent inverted trapezoids. Furthermore, according to the four modified designs shown in Figs.4A to 4D, the tooth 30b, 30c of the pixel electrode 30 can be formed by appropriately arranging the first electrode layer and the second electrode layer.

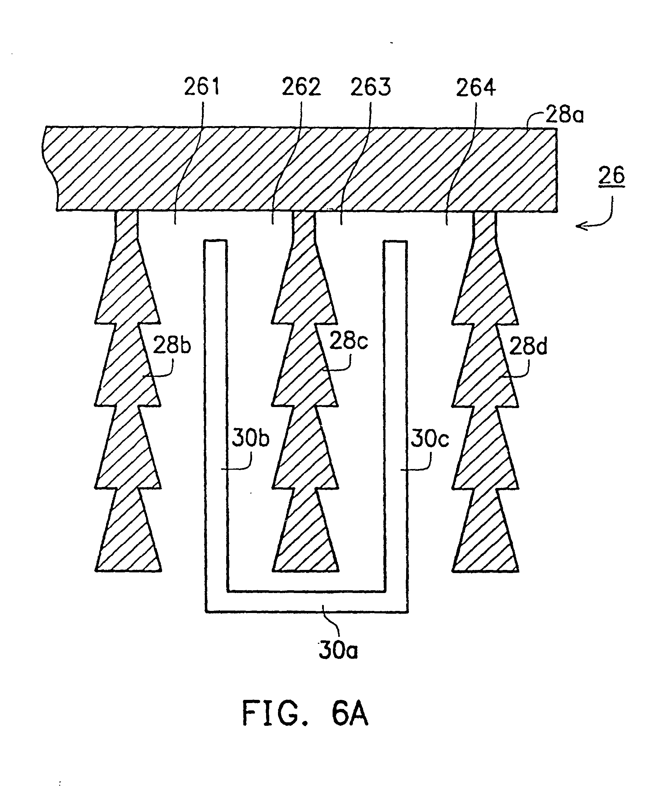

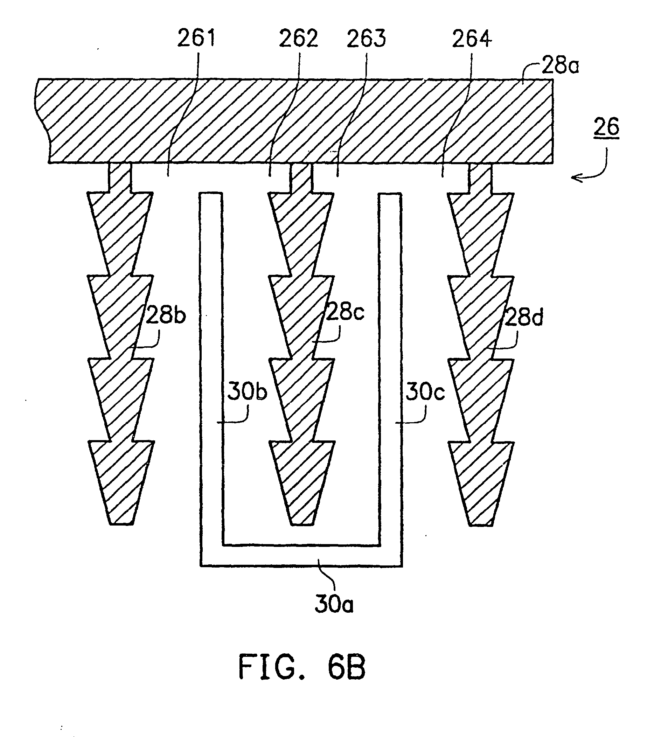

Figs. 6A and 6B are top views showing the electrode array structure of a third example of an IPS-LCD. Compared with the electrode array structure of the first example, shown in Fig.3A, in the pixel area 26 of this example, the pattern of the tooth 28b, 28c, 28d of the common electrode 28 and the pattern of the tooth 30b, 30c of the pixel electrode 30 are exchanged. Thus, the tooth 28b, 28c, 28d of the common electrode 28 is formed by lengthwise linking of specific trapezoids to present a continuous ∠-shaped sidewall, and the tooth 30b, 30c of the electrode 30 is formed as a rectangular strip. This achieves the aims of eliminating the coloring phenomenon and increasing the aperture ratio. Also, the profile of the tooth 28b, 28c, 28d of the common electrode 28 can be modified, in which a rectangular strip is disposed between two adjacent trapezoids. Moreover, as shown in Fig.6B, the profile of the tooth 28b, 28c, 28d of the common electrode 28 can be modified to present an inverted Christmas tree-like-like profile, wherein inverted trapezoids are lengthwise linked to form the tooth 28b, 28c, 28d. Furthermore, according to the four modified designs shown in Figs.4A to 4D, the tooth 28b, 28c, 28d of the common electrode 28 can be formed by appropriately arranging the first electrode layer and the second electrode layer.

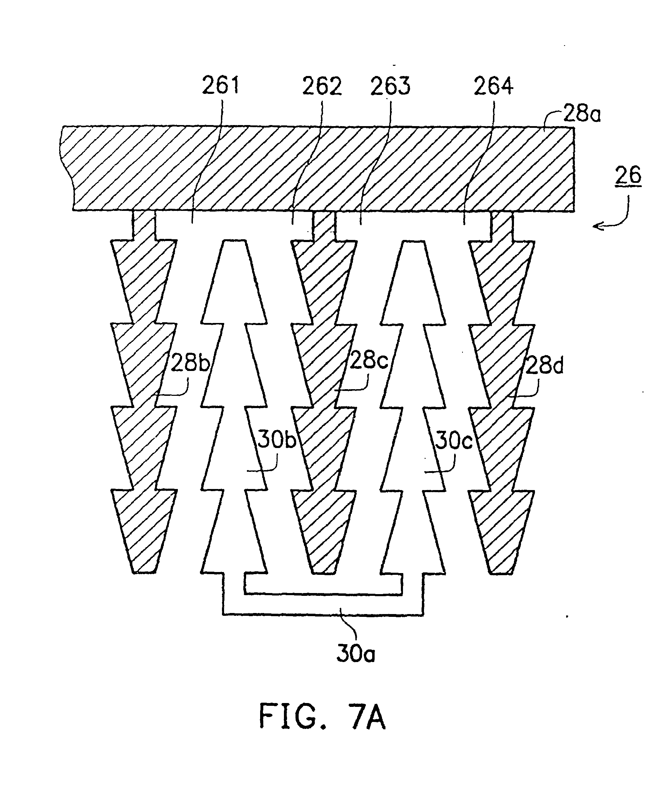

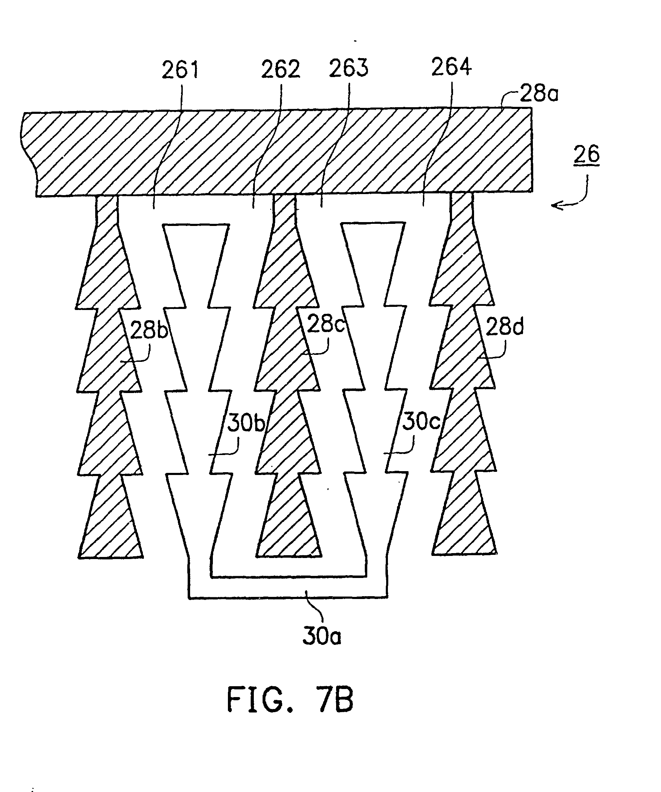

Figs. 7A and 7B are top views showing the electrode array structure of a fourth example of an IPS-LCD. In the pixel area 26 of this example, the electrode array structure is an integration of the first example, the second example and the third example. As shown in Fig.7A, when the pattern of the tooth 28b, 28c, 28d of the common electrode 28 is formed to present an inverted Christmas tree-like profile, the pattern of the tooth 30b, 30c of the pixel electrode 30 is formed to present a Christmas tree-like profile. Alternatively, as shown in Fig.7B, when the pattern of the tooth 28b, 28c, 28d of the common electrode 28 is formed to present a Christmas tree-like profile, the pattern of the tooth 30b, 30c of the pixel electrode 30 is formed to present an inverted Christmas tree-like profile. This achieves the aims of eliminating the coloring phenomenon and increasing the aperture ratio.

Also, the profile of the tooth 28b, 28c, 28d of the common electrode 28 and the tooth 30b, 30c of the pixel electrode 30 can be modified, in which a rectangular strip is disposed between two adjacent trapezoids. Moreover, according to the four modified designs shown in Figs.4A to 4D, the tooth 28b, 28c, 28d of the common electrode 28 and the tooth 30b, 30c of the pixel electrode 30 can be formed by appropriately arranging the first electrode layer and the second electrode layer.

### [The Embodiment]

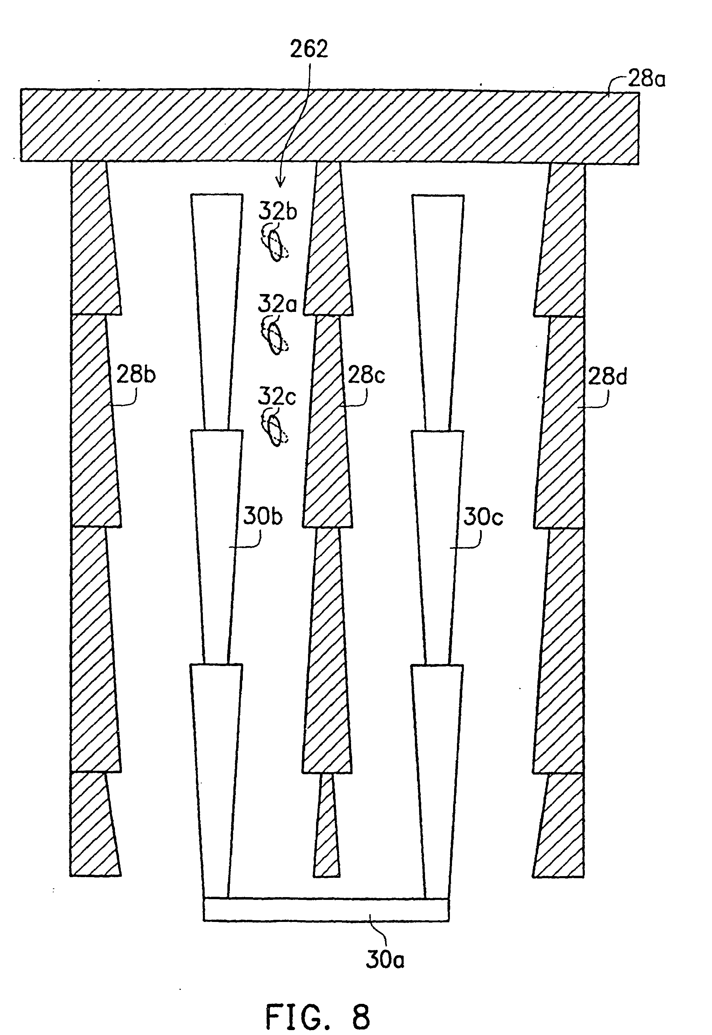

Fig. 8 is a top view showing the electrode array structure of IPS-LCD according to the present invention. In the pixel area 26 of the present invention, the electrode array structure is an integration of the fourth example, where each of the teeth 28b, 28c, 28d of the common electrode 28 is formed by lengthwise linking of a plurality of trapezoids and each of the teeth 30b, 30c of the pixel electrode 30 is formed by lengthwise linking of a plurality of inverted trapezoids. Moreover, the number of trapezoids in each of the teeth 28b, 28c, 28d of the common electrode 28 is not equal to the number of inverted trapezoids in each of the teeth 30b, 30c of the pixel electrode 30.

For example, one trapezoid in the teeth 30b of the pixel electrode 30 is adjacent two inverted trapezoids in the teeth 28b of the common electrode 28. Thus, the transverse distance between the tooth 30b of the pixel electrode 30 and the tooth 28b common electrode 28 is different along lengthwise direction, resulting in a non-uniform electric field. In other examples, one trapezoid in the teeth 30b of the pixel electrode 30 can be adjacent more than two inverted trapezoids in the teeth 28b of the common electrode 28.

In the second sub-pixel area 262, when an external voltage is applied, the smallest transverse distance exists between the point of the ∠-shaped tooth 28c and the sidewall of the tooth 30b, thus the highest electric field is generated near the point of the ∠-shaped tooth 28c. Also, the largest transverse distance exists between the parallel sidewalls of the tooth 28c and the tooth 30b, thus the lowest electric field is generated away from the point of the ∠-shaped profile. Since the differentiation of electric field to space is not zero, called a electric-field gradient, there is a non-uniform electric field existing in the second sub-pixel area 262. When the external voltage is increased to reach a predetermined value that is smaller than the driving voltage, the liquid crystal molecule 32a arranged at the larger electric field can start to rotate, and the liquid crystal molecule 32b or 32c arranged at the smaller electric field keeps still. Thereafter, as the external voltage is continuously increased to increase the rotating angle of the liquid crystal molecule 32a, elastic distorted energy is generated and transported upward to the liquid crystal molecule 32b or downward to the liquid crystal molecule 32c. Thereby, the combination of the elastic distorted energy and the low electric field can make the liquid crystal molecules 32b and 32c rotate. Preferably, the rotating angle θ of the liquid crystal molecule is 0^{o} 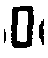 θ 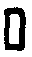 20^{o}. Compared with the prior art of using uniform electric field in each sub-pixel area, the non-uniform electric field in the sub-pixel area 262 can reduce the starting voltage, the driving voltage and the switching time of the IPS-LCD.

It is to be understood that the present invention is not limited to the examples described above, but encompasses any and all embodiments within the scope of the following claims.

## Claims

1. An electrode array structure for a pixel area (26) of an in-plane switching mode liquid crystal display, comprising:
a comb-shaped common electrode (28) having a bar (28a) extending transversely and a plurality of teeth (28b, 28c, 28d) extending in a first lengthwise direction from the bar (28a), and
a comb-shaped pixel electrode (30) having a bar (30a) extending transversely parallel to the bar of the common electrode (28a) and a plurality of teeth (30b, 30c) extending in a second lengthwise direction from the bar (30a), parallel to the first lengthwise direction, and is disposed between adjacent teeth of the common electrode;
**characterised in that**
each tooth of the common electrode (28) is formed by lengthwise linking of a first plurality of trapezoids thereby defining a continuous saw tooth shaped sidewall;
and that each tooth of the pixel electrode (30) is formed by lengthwise linking of a second plurality of trapezoids thereby defining a continuous saw tooth shaped sidewall, and the second plurality of trapezoids being inverted with respect to the first plurality of trapezoids and that the number of trapezoids in each tooth of the common electrode (28) is not equal to the number of inverted trapezoids in each tooth of the pixel electrode (30).

2. The electrode array structure according to claim 1, wherein each tooth of the pixel electrode (30) is adjacent to each tooth of the common electrode (28).

3. The electrode array structure according to claim 1, wherein the short-based length D1 and the long-based length D2 of the trapezoid satisfy the formula D2 ≤ |D1 ± 50µm|, excluding the case that D2=D1.

4. The electrode array structure according to claim 1, wherein two adjacent trapezoids are connected by a rectangular strip, and two adjacent inverted trapezoids are connected by a rectangular strip.

5. The electrode array structure according to claim 1, wherein an electric-field gradient is generated between the tooth of the common electrode (28) and the adjacent tooth of the pixel electrode (30) to form a non-uniform electric field.

6. The electrode array structure according to claim 1, wherein the rotating angle of a liquid crystal molecule arranged between the tooth of the common electrode and the adjacent tooth of the pixel electrode is between 0° and 20°.

7. The electrode array structure according to claim 1, wherein each tooth of the common electrode (28) is indium tin oxide.

8. The electrode array structure according to claim 1, wherein each tooth of the pixel electrode (30) is indium tin oxide.

## Patentansprüche

1. Elektrodenanordnungsstruktur für einen Pixelbereich (26) für ein Flüssigkristalldisplay mit Schaltmodus auf gleicher Ebene, aufweisend:
eine kammförmige gemeinsame Elektrode (28) mit einem Balken (28a), der sich transversal erstreckt, und einer Anzahl an Zähnen (28b, 28c, 28d), die sich vom Balken (28a) in einer ersten Längsrichtung erstrecken, und
eine kammförmige Pixelelektrode (30) mit einem Balken (30a), der sich transversal parallel zum Balken der gemeinsamen Elektrode (28a) erstreckt, und einer Anzahl an Zähnen (30b, 30c), die sich in eine zweite Längsrichtung von dem Balken (30a) aus parallel zur ersten Längsrichtung erstrecken und zwischen benachbarten Zähnen der gemeinsamen Elektrode angeordnet ist;
**dadurch gekennzeichnet, dass**
jeder Zahn der gemeinsamen Elektrode (28) durch eine Längsverbindung einer ersten Anzahl an Trapezoiden gebildet ist, wodurch eine kontinuierlich sägezahnförmige Seitenwand definiert wird,
und dass jeder Zahn der Pixelelektrode (30) durch eine Längsverbindung einer zweiten Anzahl an Trapezudiden gebildet ist, wodurch eine kontinuierliche sägezahnförmige Seitenwand gebildet wird, und dass die zweite Anzahl an Trapezoiden in Bezug auf die erste Anzahl an Trepezoiden umgekehrt ist und dass die Anzahl an Trapezoiden in jedem Zahn der gemeinsamen Elektrode (28) nicht gleich der Anzahl der umgekehrten Trapezoide in jedem Zahn der Pixelelektrode (30) ist.

2. Elektrodenanordnungsstruktur nach Anspruch 1, wobei jeder Zahn der Pixelelektrode (30) benachbart jedem Zahn der gemeinsamen Elektrode (28) ist.

3. Elektrodenanordnungsstruktur nach Anspruch 1, wobei die Länge D1 mit kurzer Basis und die Länge D2 mit langer Basis des Trapezoids der folgenden Formel genügen: D2 ≤ |D1 ± 50 µm|, mit Ausnahme des Falls D2=D1.

4. Elektrodenanordnungsstruktur nach Anspruch 1, wobei zwei benachbarte Trapezoide durch einen rechteckigen Streifen verbunden sind und zwei benachbarte umgekehrte Trapezoide durch einen rechteckigen Streifen verbunden sind.

5. Elektrodenanordnungsstruktur nach Anspruch 1, wobei zwischen dem Zahn der gemeinsamen Elektrode (28) und dem benachbarten Zahn der Pixelelektrode (30) ein elektrischer Feldgradient erzeugt wird, um ein nicht-einheitliches elektrisches Feld auszubilden.

6. Elektrodenanordnungsstruktur nach Anspruch 1, wobei der Rotationswinkel eines Flüssigkristallmoleküls, das zwischen dem Zahn der gemeinsamen Elektrode und dem benachbarten Zahn der Pixelelektrode angeordnet ist, zwischen 0° und 20° beträgt.

7. Elektrodenanordnungsstruktur nach Anspruch 1, wobei jeder Zahn der gemeinsamen Elektrode (28) aus Indiumzinnoxid ist.

8. Elektrodenanordnungsstruktur nach Anspruch 1, wobei jeder Zahn der Pixelelektrode (30) aus Indiumzinnoxid ist.

## Revendications

1. Structure de réseau d'électrodes pour une zone de pixels (26) d'un dispositif d'affichage à cristaux liquides à commutation dans le plan, comprenant :
une électrode commune en forme de peigne (28) ayant une barre (28a) s'étendant de manière transversale et une pluralité de dents (28b, 28c, 28d) s'étendant dans une première direction dans le sens de la longueur depuis la barre (28a), et
une électrode pixel en forme de peigne (30) ayant une barre (30a) s'étendant de manière transversale parallèlement à la barre de l'électrode commune (28a) et une pluralité de dents (30b, 30c) s'étendant dans une deuxième direction dans le sens de la longueur, et est disposée entre des dents adjacentes de l'électrode commune ;
**caractérisée en ce que**
chaque dent de l'électrode commune (28) est formée par la liaison dans le sens de la longueur d'une première pluralité de trapèzes définissant ainsi une paroi latérale en forme de dent continue ;
et **en ce que** chaque dent de l'électrode pixel (30) est formée par la liaison dans le sens de la longueur d'une deuxième pluralité de trapèzes définissant ainsi une paroi latérale en forme de dent continue, et la deuxième pluralité de trapèzes étant inversée par rapport à la première pluralité de trapèzes et **en ce que** le nombre de trapèzes dans chaque dent de l'électrode commune (28) n'est pas égal au nombre de trapèzes inversés dans chaque dent de l'électrode pixel (30).

2. Structure de réseau d'électrodes selon la revendication 1, dans laquelle chaque dent de l'électrode pixel (30) est adjacente à chaque dent de l'électrode commune (28).

3. Structure de réseau d'électrodes selon la revendication 1, dans laquelle la longueur D1 de base courte et la longueur D2 de base longue du trapèze répondent à la formule D2 ≤ |D1 ± 50 µm|, mis à part le cas où D2 = Dl.

4. Structure de réseau d'électrodes selon la revendication 1, dans laquelle deux trapèzes adjacents sont reliés par une bande rectangulaire, et deux trapèzes inversés adjacents sont reliés par une bande rectangulaire.

5. Structure de réseau d'électrodes selon la revendication 1, dans laquelle un gradient de champ électrique est généré entre la dent de l'électrode commune (28) et la dent adjacente de l'électrode pixel (30) pour former un champ électrique non uniforme.

6. Structure de réseau d'électrodes selon la revendication 1, dans laquelle l'angle de rotation d'une molécule à cristaux liquides agencée entre la dent de l'électrode commune et la dent adjacente de l'électrode pixel est compris entre 0° et 20°.

7. Structure de réseau d'électrodes selon la revendication 1, dans laquelle chaque dent de l'électrode commune (28) est de l'oxyde d'indium et d'étain.

8. Structure de réseau d'électrodes selon la revendication 1, dans laquelle chaque dent de l'électrode pixel (30) est de l'oxyde d'indium et d'étain.
